# EUROPÄISCHE PATENTSCHRIFT

(11) **EP 3 000 641 B1**
(45) Veröffentlichungstag und Bekanntmachung des Hinweises auf die Patenterteilung: **20.02.2019**
(21) Anmeldenummer: 14186847.1
(22) Anmeldetag: 29.09.2014
(51) Int. Cl.: B60K 28/04, F16P 3/14

(54) **Straßenfertiger mit Bedienmodul und Verfahren zum Aufrufen einer Bedienfunktion**
Road finisher with operating module and method for calling up an operating function
Finisseuse de route dotée d'un module de commande et procédé d'interrogation d'une fonction d'utilisation

(43) Veröffentlichungstag der Anmeldung: 30.03.2016
(73) Patentinhaber: Joseph Vögele AG, 67067 Ludwigshafen/Rhein (DE)
(72) Erfinder: Noll, Tobias, 76835 Roschbach (DE)
(74) Vertreter: Grünecker Patent- und Rechtsanwälte PartG mbB

(56) Entgegenhaltungen:
- EP-A1- 2 679 431
- EP-B1- 2 407 705
- DE-A1-102008 063 611
- DE-A1-102012 007 836
- DE-T5-112007 000 450
- US-A- 5 219 413

## Beschreibung

Die Erfindung betrifft einen Straßenfertiger mit einem Bedienmodul gemäß dem Oberbegriff des Anspruchs 1. Weiterhin bezieht sich die Erfindung auf ein Verfahren gemäß dem Anspruch 9. Es ist bekannt, dass Straßenfertiger mit mehreren Bedienständen ausgestattet sind, die jeweils eine Vielzahl von kontaktbedingter Tasten umfassen, womit sich unterschiedliche Bedienfunktionen des Straßenfertigers aufrufen lassen. Da im Laufe der Zeit die Bedienfunktionen eines Straßenfertigers stark zugenommen haben, haben sich dementsprechend auch die Funktionstasten in den jeweiligen Bedienständen vervielfacht. Die gestiegene Anzahl an Tasten erfordert ein erhöhtes Bediengeschick von dem Bediener.
Ferner hat sich herausgestellt, dass herkömmliche kontaktbedingte Tasten Verschleißerscheinungen zeigen können, wodurch sich deren Bedienbarkeit verschlechtern kann.
Nachteilig ist es auch, dass das kontaktbedingte Drücken einer Taste eine gewisse Zeit in Anspruch nimmt, weil erst nach dem erfolgten Tastendruck die dementsprechende Bedienfunktion aufgerufen wird. Insbesondere verlängert sich die Wartezeit auf eine benötigte Bedienfunktion dann, wenn zunächst durch mehrere Tasten eine gewisse Tastendruckabfolge verlangt wird, um die gewünschte Bedienfunktion zu starten. Um dem Bediener schnell Bedienfunktionen zur Verfügung zu stellen, hat sich ein kontaktbedingtes Drücken von Tasten zum Aufrufen von jeweiligen Bedienfunktionen oftmals als nicht zufriedenstellend gezeigt.
EP 2 407 705 B1 offenbart einen Straßenfertiger mit einem Anwesenheitserkennungssystem. Das Anwesenheitserkennungssystem ist dazu konfiguriert, Bedienfunktionen des Straßenfertigers zu unterbrechen, wenn sich der Bediener des Straßenfertigers nicht in einem vorbestimmten Abstand zum Bedienpult auf dem Straßenfertiger befindet. Das Anwesenheitserkennungssystem ist ferner dazu konfiguriert, sämtliche Bedienfunktionen des Straßenfertigers zum Aufruf zur Verfügung zu stellen, wenn der Bediener ordnungsgemäß auf dem Straßenfertiger positioniert ist.
EP 2 679 431 A1 offenbart einen Gabelstapler mit automatischer Funktionsaktivierung, wenn ein Bediener ordungsgemäß auf dem Bedienstand des Gabelstaplers steht.

Der Erfindung liegt die Aufgabe zugrunde, einen Straßenfertiger sowie ein Verfahren mittels einfacher konstruktiver Merkmale dahingehend zu verbessern, dass sich damit Bedienfunktionen des Straßenfertigers innerhalb kurzer Zeit aufrufen lassen.
Diese Aufgabe wird gelöst durch einen Straßenfertiger mit den Merkmalen des Anspruchs 1 bzw. durch ein Verfahren mit den Merkmalen des Anspruchs 9. Vorteilhafte Weiterbildungen der Erfindung sind in den Unteransprüchen angegeben.

Bedienfunktionen, die gemäß der Erfindung schnell einsatzbereit und aufrufbar sein sollen, können beispielsweise Funktionen der Einbaubohle, insbesondere Funktionen, die im Zusammenhang mit dessen Nivellierung, dem Aufheizen dieser und/oder dem Verdichten durch diese stehen, Funktionen des Gutbunkers und/oder Funktionen des Materialfördersystems des Straßenfertigers sein. Insbesondere handelt es sich dabei um Funktionen des Straßenfertigers, deren Betrieb ein Laufen des Motors des Straßenfertigers voraussetzt.

Erfindungsgemäß verfügt der Straßenfertiger über eine Sensorvorrichtung, die dazu konfiguriert ist, eine Distanz eines Bedieners zu einem Bedienmodul zu erfassen, die einen Abstand von dem Bedienmodul zu irgendeinem Körperteil des Bedieners festlegt, wobei die Sensorvorrichtung mit einer Steuervorrichtung des Straßenfertigers verbunden ist, die dazu ausgebildet ist, mittels eines Ausgangssignals bereits dann mindestens eine der Bedienfunktionen des Straßenfertigers aufzurufen, wenn der Bediener in Bezug zu dem Bedienmodul eine vorbestimmte Schwellendistanz unterschreitet. Bei der Erfindung kann also das Aufrufen mindestens einer Bedienfunktion berührungslos und zwar basierend auf einer Abstandsmessung stattfinden. Ist der Bediener innerhalb eines vorbestimmten Abstandes zum Bedienmodul positioniert, ist mindestens eine vorbestimmte Bedienfunktion automatisch aufrufbar, wodurch sich infolgedessen auch weitere, insbesondere funktional damit verbundene andere Bedienfunktionen des Fertigers schneller aufrufen lassen.

Die Distanz ist vorzugsweise definiert als kürzester Abstand zwischen der Sensorvorrichtung und irgendeinem Körperteil des Bedieners. Im Betrieb dürften in der Regel die Hände bzw. Finger des Bedieners der Sensorvorrichtung am Nächsten kommen.

Insbesondere ist es durch die Erfindung möglich, dass mindestens eine Basisbetriebsfunktion, welche generell zum normalen Betrieb und/oder für einen bestimmten Modus des Straßenfertigers aktiviert werden sollte, beispielsweise das Starten des Motors des Straßenfertigers, das Vorheizen der Einbaubohle, das Vorheizen des Hydrauliksystems und/oder eine andere funktionale Grundeinstellung des Fertigers, automatisch durch das Unterschreiten der Schwellendistanz relativ zum Bedienmodul ohne zusätzlichen Tastendruck durch den Bediener aktivierbar ist. Dies stellt sicher, dass der Straßenfertiger insbesondere zum Einbau eines neuen Straßenbelages ordnungsgemäß und zügiger in Betrieb genommen werden kann.

Das erfinderische Prinzip, wodurch sich bestimmte Bedienfunktionen kontaktlos auch aus einer gewissen Distanz zum Bedienmodul aktivieren lassen, ermöglicht es dem Bediener auch, Bedienfunktionen außerhalb seiner Reichweite zu aktivieren, für deren Aktivierung er bisher seinen Platz verlassen musste, um eine Taste zu drücken.

Insbesondere hat sich das erfindungsgemäße Prinzip im Zusammenhang mit einem Bedienmodul als vorteilhaft erwiesen, welches in einer Führerkabine und/oder an einer Einbaubohle des Straßenfertigers angeordnet ist. Bei Letzterem kann der Bediener dank des erfindungsgemäßen Prinzips in einem gewissen Abstand zum Bedienmodul neben der Einbaubohle herlaufen und zur Einbaubohle einen vorbestimmten Sicherheitsabstand einhalten, wobei ihm dabei dennoch das Aufrufen unterschiedlicher Bedienfunktionen ermöglicht wird, selbst wenn er nicht ganz mit seiner Hand bis zum Bedienmodul reicht.

Das erfindungsgemäße Prinzip der kontaktlosen Aktivierung von Bedienfunktionen wurde vorstehend im Zusammenhang mit einem Straßenfertiger beschrieben, wobei es auch in vorteilhafter Weise an anderen selbstfahrenden Baumaschinen, beispielsweise an einem Beschicker, anwendbar ist.

Vorzugsweise umfasst das Bedienmodul eine Start-Stopp-Taste, die zum Starten und/oder Stoppen des Dieselmotors des Straßenfertigers ausgebildet ist. Als Alternative zur Inbetriebnahme des Motors mittels Tastendrucks oder ergänzend dazu kann die Steuervorrichtung dazu konfiguriert sein, bereits dann ein Startsignal zum Starten des Dieselmotors zu generieren, wenn der Bediener in Bezug zu dem Bedienmodul, insbesondere in Bezug zur Start-Stopp-Taste, die vorbestimmte Schwellendistanz unterschreitet. Der Motor ließe sich dadurch besonders schnell und einfach starten. Dies hätte auch den positiven Effekt, dass andere Bedienfunktionen, welche das Laufen des Motors voraussetzen, schneller aufrufbar sind, weil zuvor kein Tastendruck zum Starten des Motors mehr verlangt wird.

Weiterhin ist es gemäß einer Variante der Erfindung möglich, dass die Steuervorrichtung dazu konfiguriert ist, beim Starten des Motors automatisch mindestens ein Ausgangssignal zu generieren, um andere Bedienfunktionen, vornehmlich zeitgleich, in Betriebsbereitschaft zu stellen, sodass der Bediener diese nicht mehr selbst aufrufen muss. Dabei kann es sich insbesondere um die an weiter oberer Stelle genannten Basisbetriebsfunktionen handeln. Somit ließen sich in Folge des Startens des Motors gleich mehrere Bedienfunktionen in einen betriebsbereiten Zustand versetzten, sodass die Arbeit mit dem Straßenfertiger noch schneller beginnen kann.

Vorteilhaft ist es auch, wenn die Steuervorrichtung dazu konfiguriert ist, beim Starten des Motors zeitverzögert mindestens ein Ausgangssignal zu generieren, um damit mindestens eine weitere Bedienfunktion des Straßenfertigers in Betriebsbereitschaft zu stellen, sodass der Bediener diese nicht mehr selbst aufrufen muss. Dies ist vor allem zweckmäßig für (Basis-)Bedienfunktionen, die eine gewisse Vorlaufzeit, d.h. ein Warmlaufen des Motors verlangen, bevor sie selbst aufgerufen werden. Dabei kann es sich insbesondere um hydraulisch funktionierende Einheiten des Straßenfertigers handeln.

In einer anderen vorteilhaften Ausführungsvariante der Erfindung verlangt mindestens eine erste der Bedienfunktionen, welche kontaktbedingt mittels einer Taste und/oder berührungslos aktivierbar ist, eine zeitlich vorangestellte Aktivierung mindestens einer zweiten Bedienfunktion, wobei die Aktivierung der zweiten Bedienfunktion kontaktbedingt mittels einer Taste und/oder berührungslos geschieht, indem der Bediener in Bezug zu dem Bedienmodul die Schwellendistanz unterschreitet. Bei dieser Ausführungsvariante kann es beispielsweise möglich sein, dass der Bediener mit seiner linken Hand die Schwellendistanz zum Bedienmodul, insbesondere in Bezug zu einer der zweiten Bedienfunktion funktional zugeordneten Taste, unterschreitet, um die zweite Bedienfunktion zu aktivieren, wobei er zeitgleich oder mit einem gewissen zeitlichen Verzug mit seiner rechten Hand eine Einstellung der ersten Bedienfunktion durchführt.

Vorteilhaft ist es auch, wenn das Bedienmodul eine Signaleinheit, vornehmlich eine akustische und/oder eine visuelle Signaleinheit, umfasst, welche dem Bediener anzeigen kann, ob er berührungslos eine oder mehrere der Bedienfunktionen aktiviert hat. Die Signaleinheit ist vorzugsweise dazu ausgebildet, mittels eines Signals, beispielsweise mittels eines Blinklichts und/oder mittels eines bestimmten Tonsignals, dem Bediener den Zustand der Bedienfunktion anzuzeigen, d.h. ab wann die Bedienfunktion voll einsatzfähig ist und/oder ob die Bedienfunktion aufgerufen ist.

Besonders vorteilhaft ist es, wenn die Sensorvorrichtung im Bedienmodul des Straßenfertigers eingebaut ist. Dies ermöglicht eine besonders exakte Überwachung, ob der Bediener die vorbestimmte Schwellendistanz relativ zum Bedienmodul unterschreitet. Außerdem ist die Sensorvorrichtung innerhalb des Bedienmoduls gut geschützt.

Ebenso gut ist es möglich, dass die Steuervorrichtung in dem Bedienmodul eingebaut ist. Vorstellbar ist es auch, dass die Sensorvorrichtung an einer anderen Stelle als die Steuervorrichtung, allerdings vornehmlich innerhalb des Führerstandes des Straßenfertigers angeordnet ist und einen Abstand von sich zum Bediener misst, wobei basierend auf dieser Abstandmessung, insbesondere vektoriell, eine Entfernung zum Bedienmodul ableitbar ist, um darüber zu entscheiden, ob der Bediener die Schwellendistanz unterschreitet. Beispielsweise könnte die Sensorvorrichtung an der Unterseite des Führerstanddachs befestigt sein, von wo aus sich der Bediener unterhalb vor dem Bedienmodul gut erfassen lässt.

Zweckmäßig ist es auch, wenn die Sensorvorrichtung mindestens einen Sensor aufweist, der dazu konfiguriert ist, die Distanz des Bedieners zu dem Bedienmodul zu erfassen. Möglich wäre es auch, dass die Sensorvorrichtung mehrere Sensoren umfasst, die dazu ausgebildet sind, einen dreidimensionalen Raum um das Bedienmodul herum zu erfassen, damit eine Annäherung des Bedieners aus unterschiedlichen Richtungen an das Bedienmodul erfassbar ist.

In einer weiteren vorteilhaften Variante der Erfindung ist der Sensor ein erster Sensor, der in Bezug zu einer ersten Bedienfunktion näher an einer ersten Taste angeordnet ist, durch welche die erste Bedienfunktion aktivierbar ist, als an einer zweiten Taste, durch welche eine zweite Bedienfunktion aktivierbar ist. Der erste Sensor befindet sich daher in unmittelbarer Nähe zu derjenigen Taste, mittels der auch eine kontaktbedingte Aktivierung der entsprechenden Bedienfunktion durchführbar ist. Dem Bediener ist es somit bewusst, welcher Taste er sich nähern muss, um insbesondere bezüglich dieser die vorbestimmte Schwellendistanz zu unterschreiten, damit er die entsprechende Bedienfunktion aktiviert.

Besonders präzise funktioniert die berührungslose Aktivierung der ersten Bedienfunktion dann, wenn der erste Sensor in der ersten Taste integriert verbaut ist. Somit ist es für den Bediener klar, welcher Taste er seine Hand annähern muss, um die funktional mit dieser Taste gekoppelte Bedienfunktion berührungslos aufzurufen.

Besonders zweckmäßig für die Erfindung ist es, wenn der Sensor ein Infrarotsensor, ein induktiver Sensor, ein kapazitiver Sensor, ein Radarsensor oder ein Ultraschallsensor ist. Diese Sensoren ermöglichen ein zuverlässiges berührungsloses Erfassen der Distanz zum Bediener.

Aus sicherheitsrelevanter Sicht kann es vorteilhaft sein, wenn manche der Bedienfunktionen einen kontaktbedingten, zeitlich vorangestellten Tastendruck einer anderen Taste voraussetzen, um aufrufbar zu sein, sozusagen einen allgemeinen Freigabeschalter bedingen. Somit kann vermieden werden, dass Bedienfunktionen versehentlich aufgerufen werden, wenn sich der Bediener nicht in der Nähe des Straßenfertigers befindet.

Besonders vorteilhaft ist es, wenn die vorbestimmte Schwellendistanz durch die Steuervorrichtung variierbar ist. Dadurch kann die Empfindlichkeit des Aufrufens der jeweiligen Bedienfunktionen eingestellt werden. Je nachdem, an welcher Stelle sich das Bedienmodul am Straßenfertiger befindet, kann eine Reduzierung bzw. Erhöhung der vorbestimmten Schwellendistanz vorteilhaft sein. Beispielsweise kann eine Erhöhung der vorbestimmten Schwellendistanz vorteilhaft hinsichtlich eines Bedienmoduls sein, welches an einer Einbaubohle befestigt ist, sodass der neben der Einbaubohle herlaufende Bediener nicht zu nahe an den Arbeitsbereich der Einbaubohle heran kommt, um die ein oder andere Bedienfunktion des Bedienmoduls aufzurufen.

Auf dem Führerstand des Straßenfertigers kann eine Reduzierung der vorbestimmten Schwellendistanz vorteilhaft sein, damit eine versehentliche Aktivierung von Bedienfunktionen vermieden wird.

Die zuvor genannten Ausführungsformen der Erfindung beziehen sich größtenteils auf das berührungslose Aktivieren von Bedienfunktionen eines Straßenfertigers. Natürlich können gemäß Ausführungsformen der Erfindung Bedienfunktionen des Straßenfertigers auch berührungslos deaktiviert werden, was beispielsweise durch eine Schwellenwertunterschreitung durch den Bediener geschieht, nachdem die Bedienfunktion aktiviert wurde. Ebenfalls kann es auch sein, dass mittels der Deaktivierung einer bestimmten Bedienfunktion gleichzeitig oder verzögert die Deaktivierung mindestens einer weiteren Bedienfunktion einhergeht. Alternativ ist es auch möglich, dass berührungslos aktivierte Bedienfunktionen separat oder gemeinsam mittels Tastendrucks deaktivierbar sind. Insbesondere ist die Steuereinrichtung dazu konfiguriert, sämtliche Bedienfunktionen abzuschalten, wenn der Antrieb des Straßenfertigers ausgeschalten wird.

Zweckmäßig ist es auch, wenn das Bedienmodul mindestens eine kontaktlos aktivierbare Modustaste für den Betrieb des Straßenfertigers, beispielsweise für den Modus Einbaufahrt, Umsetzen und/oder Transport, umfasst, wobei die Steuervorrichtung dazu ausgebildet ist, durch die Aktivierung der Modustaste eine vorbestimmte Anzahl modustypischer Bedienfunktionen automatisch zu aktivieren und/oder zu deaktivieren, wenn die Schwellendistanz bezüglich der Modustaste unterschritten wird.

Die Erfindung bezieht sich auch auf ein Verfahren zum kontaktlosen Aufrufen mindestens einer Bedienfunktion eines Straßenfertigers. Dazu wird zunächst eine Distanz zwischen einem Bedienmodul des Straßenfertigers zu einem Bediener mittels einer Sensorvorrichtung des Straßenfertigers gemessen. Die Distanz legt dabei einen Abstand von dem Bedienmodul zu irgendeinem Körperteil des Bedieners fest. Anschließend wird die gemessene Distanz mittels einer Steuervorrichtung des Straßenfertigers in Bezug zu einer vorbestimmten Schwellendistanz ausgewertet. Ergibt diese Auswertung, dass die gemessene Distanz die vorbestimmte Schwellendistanz unterschreitet, dann wird automatisch mindestens eine Bedienfunktion des Straßenfertigers aktiviert.

Diese Art des kontaktlosen Aufrufens von Bedienfunktionen des Straßenfertigers führt zu einer verkürzten Aktivierungszeit einer entsprechenden Bedienfunktion, wobei die zuvor im Zusammenhang mit einem kontaktbedingten Tastendruck beschriebenen Nachteile aus dem Stand der Technik vermieden werden können.

Vorzugsweise wird mindestens eine erste der Bedienfunktionen automatisch aktiviert, wenn eine Aktivierung mindestens einer zweiten Bedienfunktion, beispielsweise das Anschalten eines Antriebs, insbesondere des Dieselmotors des Straßenfertigers, vorausgeht, wobei die zweite Bedienfunktion berührungslos aktiviert wird, indem der Bediener in Bezug zu dem Bedienmodul die Schwellendistanz unterschreitet. Somit läuft die Aktivierung einer Bedienfunktion, die zunächst die Aktivierung einer anderen Bedienfunktion voraussetzt schneller ab und steht daher dem Bediener innerhalb kurzer Zeit zur Verfügung.

Insbesondere vorteilhaft ist es, wenn die berührungslos aktivierte zweite Bedienfunktion das Starten eines Dieselmotors des Straßenfertigers ist. Insbesondere werden dadurch auch gleich noch andere (Basis-)Bedienfunktionen zeitgleich oder zeitverzögert mit angeschaltet.

Mittels des Verfahrens können die zuvor im Zusammenhang mit dem Straßenfertiger genannten strukturellen Merkmale anhand analoger verfahrenstechnischer Merkmale durchgeführt werden, weswegen eine detaillierte Beschreibung solcher Merkmale an dieser Stelle nicht mehr durchgeführt wird.

Im Folgenden wird ein vorteilhaftes Ausführungsbeispiel der Erfindung anhand einer Zeichnung näher dargestellt. Im Einzelnen zeigen:
- Figur 1:: einen Straßenfertiger mit einem Bedienmodul, welches zum berührungslosen Aufrufen einer Bedienfunktion ausgebildet ist,
- Figur 2:: eine schematische Darstellung eines Bedienmoduls gemäß der Erfindung, welches zur berührungslosen Aktivierung mehrerer Bedienfunktion konfiguriert ist,
- Figur 3:: einen Straßenfertiger gemäß einer Ausführungsform, bei welcher das erfindungsgemäße Bedienmodul an der Einbaubohle des Straßenfertigers befestigt ist, und
- Figur 4:: eine vergrößerte Darstellung des erfindungsgemäßen Bedienmoduls relativ zu einem Sitz des Straßenfertigers.

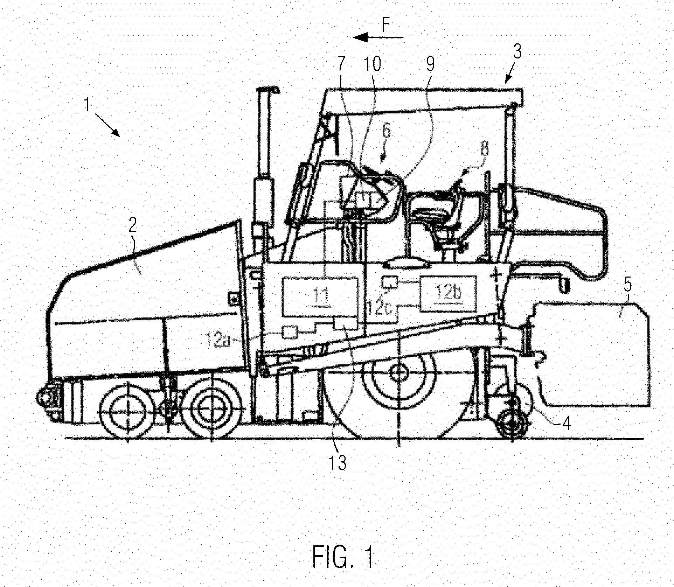

Figur 1 zeigt einen Straßenfertiger 1 zur Herstellung eines Straßenbelags. Der Straßenfertiger ist von links nach rechts in Fahrtrichtung F gesehen mit einem Gutbunker 2, einer Führerkabine 3, einem Querverteiler 4 sowie einer Einbaubohle 5 ausgestattet. Aus dem Gutbunker 2 wird Einbaumaterial mittels einer nicht gezeigten Fördervorrichtung dem Querverteiler 4 zugeführt, der das Einbaumaterial vor der Einbaubohle 5 verteilt, von welcher das Einbaumaterial schließlich verdichtet wird.

Die Führerkabine 3 des Straßenfertigers 1 umfasst einen Bedienstand 6 mit einem Bedienmodul 7. Neben dem Bedienstand 6 ist ein Sitz 8 positioniert, auf welchem ein Bediener Platz nehmen kann und von dort aus mittels des Bedienmoduls 7 unterschiedliche Bedienfunktionen des Straßenfertigers 1 koordinieren kann. Figur 1 zeigt weiter eine Sensorvorrichtung 9, welche im Bedienmodul 7 eingebaut ist. Die Sensorvorrichtung 9 ist dazu konfiguriert, eine Annäherung des Bedieners an das Bedienmodul 7 zu erfassen, wenn sich der Bediener in der Führerkabine 3 befindet. Im Bedienmodul 7 ist neben der Sensorvorrichtung 9 eine Steuervorrichtung 10 angeordnet. Die Steuervorrichtung 10 ist funktional mit der Sensorvorrichtung 9 verbunden, wobei sie dazu ausgebildet ist, automatisch einen Bedienbefehl zum Aufrufen einer Bedienfunktion zu generieren, wenn mittels der Sensorrichtung 9 eine Annäherung des Bedieners an das Bedienmodul 7 erfasst wird.

Weiterhin zeigt Figur 1 schematisch einen Antrieb 11 des Straßenfertigers 1. Der Antrieb 11 kann als Dieselmotor ausgebildet sein. Der Antrieb 11 ist funktional mit mehreren Arbeitseinheiten 12a, 12b, 12c verbunden, die dazu ausgebildet sind, in Abhängigkeit des Betriebs des Antriebs 11 spezifische Bedienfunktionen am Straßenfertiger 1 auszuführen. Eine Leistungsübertragung vom Antrieb 11 an die jeweiligen Arbeitseinheiten 12a, 12b, 12c kann gemäß Figur 1 über einen Leistungsverteiler 13 geschehen, der beispielsweise als Verteilergetriebe ausgebildet ist. Obwohl die Arbeitseinheiten 12a, 12b, 12c gemäß Figur 1 direkt mit dem Antrieb 11 in funktionaler Verbindung stehen, können die Arbeitseinheiten 12a, 12b, 12c auch vom Antrieb 11 entkoppelt sein, wobei mindestens manche davon über die Steuervorrichtung 10 in Abhängigkeit des Zustands/Modus des Antriebs 11 automatisch aufgerufen werden können.

Ferner zeigt Figur 1, dass die im Bedienmodul 7 angeordnete Steuervorrichtung 10 mit dem Antrieb 11 des Straßenfertigers 1 verbunden ist. Die Steuervorrichtung 10 ist dazu konfiguriert den Betrieb des Antriebs 11 des Straßenfertigers 1 in Abhängigkeit einer Positionierung des Bedieners in der Führerkabine 3 relativ zum Bedienmodul 7 aufzurufen, wobei vor allem das Starten des Antriebs 11 automatisch dann durch die Steuervorrichtung 10 initiiert wird, wenn eine vorbestimmte Annäherung des Bedieners an das Bedienmodul 7 geschieht. Ein zusätzlicher kontaktbedingter Tastendruck ist dabei zum Starten des Antriebs 11 nicht nötig.

Die Arbeitseinheiten 12a, 12b, 12c können insbesondere Bedienfunktionen des Gutbunkers 2, des Querverteilers 4, eines nicht gezeigten Hydrauliksystems des Straßenfertigers 1 und/oder der Einbaubohle 5 koordinieren.

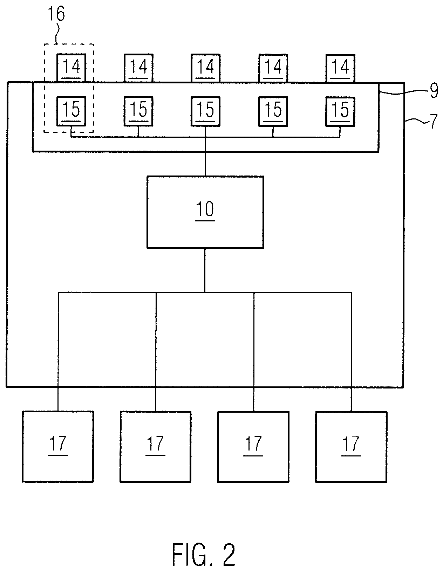

Figur 2 zeigt eine schematische Darstellung des Bedienmoduls 7 aus der Figur 1. Das Bedienmodul 7 umfasst eine Vielzahl von Tasten 14, die mittels Tastendrucks zur Eingabe eines Bedienbefehls bedienbar sind, um unterschiedliche Bedienfunktionen des Straßenfertigers 1 aufzurufen. Unterhalb der Tasten 14 ist im Bedienmodul 7 die Sensorvorrichtung 9 angeordnet. Die Sensorvorrichtung 9 umfasst eine Vielzahl von Sensoren 15. Gemäß der Figur 2 bilden die Tasten 14 zusammen mit den Sensoren 15 jeweilige Aktivierungseinheiten 16 aus. Die jeweiligen Aktivierungseinheiten 16 sind dazu konfiguriert, Bedienbefehle entweder kontaktbedingt mittels Tastendrucks oder berührungslos mittels der Sensoren 15 an die Steuervorrichtung 10 weiterzugeben, um entsprechende Bedienfunktionen des Straßenfertigers 1 aufzurufen. Über die Aktivierungseinheiten 16 lassen sich somit Bedienbefehle mittels Tastendrucks durch die Tasten 14 eingeben oder berührungslos mittels einer Erfassung durch die Sensoren 15, wenn der Bediener, d.h. irgendein Körperteil des Bedieners, sich dem Bedienmodul 7, insbesondere einer entsprechenden Taste 14, nähert.

Bedienbefehle, welche von den Tasten 14 und/oder den Sensoren 15 an die Steuervorrichtung 10 weitergegeben werden, werden von der Steuervorrichtung 10 zum Aufrufen entsprechender Bedienfunktionen des Straßenfertigers 1 verwendet. In der Figur 2 ist die Steuervorrichtung 10 weiterhin funktional mit Arbeitskomponenten 17 verbunden. Die Arbeitskomponenten 17 führen unterschiedliche Bedienfunktionen des Straßenfertigers 1 durch. Eine der Arbeitskomponenten 17 kann beispielsweise der Antrieb 11 aus Figur 1 sein. Gemäß Figur 2 ließe sich dann der Antrieb 11 mittels einer der Aktivierungseinheiten 16 kontaktbedingt mittels Tastendrucks und/oder berührungslos durch eine Annäherung eines Körperteils des Bedieners an den entsprechenden Sensor 15 koordinieren.

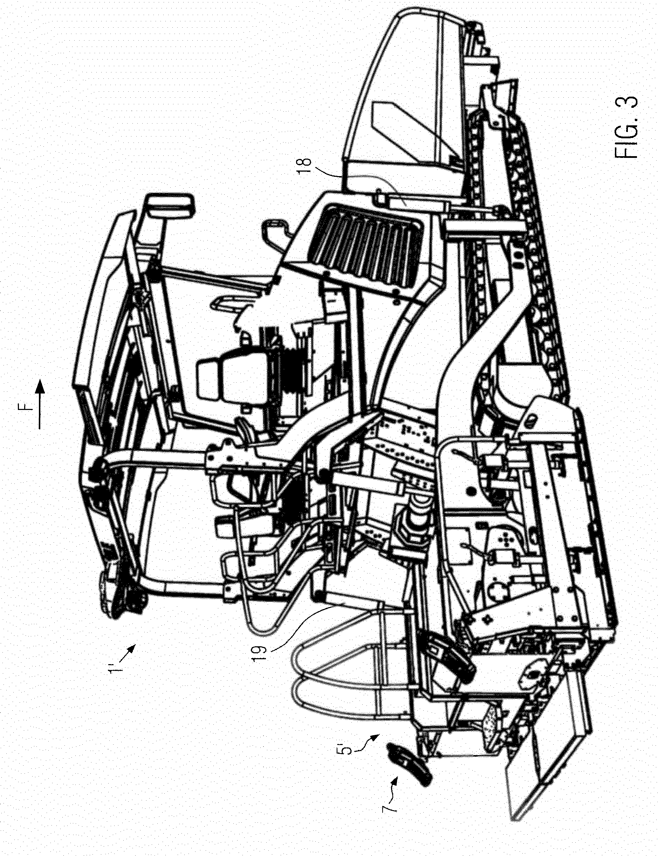

Figur 3 zeigt einen Straßenfertiger 1', welcher im Wesentlichen denselben Aufbau wie der Straßenfertiger 1 aus Figur 1 hat. Zusätzlich zum Straßenfertiger 1 aus Figur 1 umfasst der Stra-ßenfertiger 1' aus Figur 3 zwei Bedienmodule 7', welche an der Einbaubohle 5' befestigt sind. Obwohl in dieser Ausführungsform zwei Bedienmodule 7' gezeigt werden, kann es auch sein, dass an der Einbaubohle 5' lediglich ein Bedienmodul 7' befestigt ist. Die Bedienmodule 7' sind dazu konfiguriert, den Betrieb der Einbaubohle 5' zu koordinieren, insbesondere Heiz-, Verdichtungs-, Vibrations- und/oder Nivellierparameter der Einbaubohle einzustellen. Beispielsweise lassen sich mittels der Bedienmodule 7' Nivellierzylinder 18 sowie Hubzylinder 19 ansteuern, um eine Bewegung der Einbaubohle 5'zu koordinieren.

Das erfinderische Prinzip, welches anhand der Figuren 1 und 2 im Zusammenhang mit einer berührungslosen Aktivierung von Bedienbefehlen beschrieben wurde, ist auch in den Bedienmodulen 7' der Figur 3 anwendbar. Die Bedienmodule 7' lassen sich daher sowohl mittels Tastensdrucks, als auch berührungslos steuern, um Bedienfunktionen der Einbaubohle 5' aufzurufen.

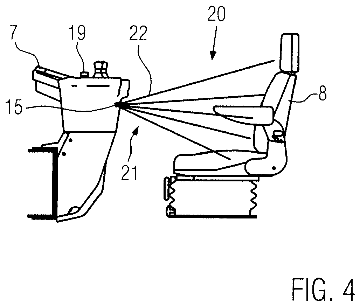

Figur 4 zeigt das Bedienmodul 7 aus Figur 1 relativ zum Sitz 8 der Führerkabine 3 in vergrößerter Darstellung. Das Bedienmodul 7 umfasst eine Start-Stopp-Taste 19, mittels welcher sich der Antrieb 11 kontaktbedingt starten sowie ausschalten lässt. Ferner zeigt Figur 4, dass einer der Sensoren 15 aus Figur 2 derart im Bedienmodul 7 angeordnet ist, dass er einen Raum 20 zwischen dem Bedienmodul 7 und dem Sitz 8 überwacht. Der Raum 20 weist neben dem Bedienmodul 7 einen Teilraum 21 auf, welcher durch eine Schwellendistanz 22 bestimmt wird. Ein Unterschreiten der Schwellendistanz 22 mit irgendeinem Körperteil des Bedieners, sei es beispielsweise die Hand oder das Bein, löst einen Start-Stopp-Bedienbefehl des Antriebs 11 aus, welcher alternativ dazu auch kontaktbedingt mittels Tastendrucks der Start-Stopp-Taste 19 auslösbar ist. Bei Figur 4 ist der Sensor 15 auf einer dem Bediener zugewandten Seite des Bedienmoduls 7 angeordnet, wobei der Sensor 15 auch näher an der Start-Stopp-Taste 19 bzw. ganz in dieser integriert sein kann, um erst dann ein Unterschreiten der Schwellendistanz 22 zu erkennen, wenn die Hand des Bedieners in Richtung der Start-Stopp-Taste 19 greift. Diese Annäherungserfassung lässt sich auf sämtliche Bedientasten des Bedienmoduls 7 übertragen.

Das erfindungsgemäße Prinzip der berührungslosen Aktivierung von Bedienfunktionen lässt sich hervorragend bei sämtlichen Bedienmodulen eines Straßenfertigers einsetzen, um in vorteilhafterweise Bedienfunktionen des Straßenfertigers aufzurufen.

## Patentansprüche

1. Straßenfertiger (1, 1') mit mindestens einem Bedienmodul (7, 7') zur Eingabe von Bedienbefehlen, wobei das Bedienmodul (7, 7') eine Vielzahl von Tasten (14) aufweist, die jeweils kontaktbedingt zur Eingabe der jeweiligen Bedienbefehle betätigbar sind, um entsprechende Bedienfunktionen des Straßenfertigers (1, 1') aufzurufen, wobei der Straßenfertiger (1, 1') weiterhin eine Sensorvorrichtung (9) umfasst, die dazu ausgebildet ist, eine Distanz eines Bedieners zu dem Bedienmodul (7, 7') zu erfassen, welche Distanz einen Abstand von dem Bedienmodul (7, 7') zu irgendeinem Körperteil des Bedieners festlegt, wobei die Sensorvorrichtung (9) mit einer Steuervorrichtung (10) des Straßenfertigers (7, 7') verbunden ist, **dadurch gekennzeichnet, dass** die Steuervorrichtung (10) dazu konfiguriert ist, mittels eines Ausgangssignals bereits dann mindestens eine der Bedienfunktionen des Straßenfertigers (1, 1') aufzurufen, wenn der Bediener in Bezug zu dem Bedienmodul (7, 7') eine vorbestimmte Schwellendistanz (22) unterschreitet, wobei mindestens eine erste der Bedienfunktionen eine zeitlich vorangestellte Aktivierung mindestens einer zweiten Bedienfunktion voraussetzt, wobei die Aktivierung der zweiten Bedienfunktion berührungslos geschieht, indem der Bediener in Bezug zu dem Bedienmodul (7, 7') die Schwellendistanz (22) unterschreitet.

2. Straßenfertiger nach Anspruch 1, **dadurch gekennzeichnet, dass** das Bedienmodul eine Start-Stopp-Taste (19) umfasst, die zum Starten und/oder Stoppen eines Dieselmotors (11) des Straßenfertigers (1, 1') ausgebildet ist, wobei die Steuervorrichtung dazu ausgebildet ist, bereits dann ein Startsignal zum Starten des Dieselmotors (11) zu generieren, wenn der Bediener in Bezug zu dem Bedienmodul (7, 7') die vorbestimmte Schwellendistanz (22) untersch reitet.

3. Straßenfertiger nach einem der vorigen Ansprüche, **dadurch gekennzeichnet, dass** die Sensorvorrichtung (9) im Bedienmodul (7, 7') des Straßenfertigers (1, 1') eingebaut ist.

4. Straßenfertiger nach einem der vorigen Ansprüche, **dadurch gekennzeichnet, dass** die Sensorvorrichtung (9) mindestens einen Sensor (15) aufweist, der dazu konfiguriert ist, die Distanz des Bedieners zu dem Bedienmodul (7, 7') zu erfassen.

5. Straßenfertiger nach Anspruch 4, **dadurch gekennzeichnet, dass** der Sensor (15) ein erster Sensor ist, der in Bezug zu der ersten Bedienfunktion näher an einer ersten Taste (14) angeordnet ist, durch welche die erste Bedienfunktion aktivierbar ist, als an einer zweiten Taste (14), durch welche die zweite Bedienfunktion aktivierbar ist.

6. Straßenfertiger nach Anspruch 5, **dadurch gekennzeichnet, dass** der erste Sensor (15) in der ersten Taste (14) integriert ist.

7. Straßenfertiger nach einem der vorigen Ansprüche 4 bis 6, **dadurch gekennzeichnet, dass** der Sensor (15) ein Infrarotsensor, ein induktiver Sensor, ein kapazitiver Sensor, ein Radarsensor oder ein Ultraschallsensor ist.

8. Straßenfertiger nach einem der vorigen Ansprüche, **dadurch gekennzeichnet, dass** manche der Bedienbefehle einen kontaktbedingten, zeitlich vorangestellten Tastendruck einer anderen Taste (14) voraussetzen, um eine entsprechende Bedienfunktion aufzurufen.

9. Verfahren zum Aufrufen mindestens einer Bedienfunktion eines Straßenfertigers (1, 1'), umfassend die folgenden Schritte:
• Messen einer Distanz zwischen einem Bedienmodul (7, 7') des Straßenfertigers (1, 1') zu einem Bediener mittels einer Sensorvorrichtung (9) des Straßenfertigers (1, 1'), welche Distanz einen Abstand von dem Bedienmodul (7, 7') zu irgendeinem Körperteil des Bedieners festlegt,
• Auswerten der gemessenen Distanz mittels einer Steuervorrichtung (10) des Straßenfertigers (1, 1') in Bezug zu einer vorbestimmten Schwellendistanz (22), und
• Automatisches Aktivieren mindestens einer Bedienfunktion des Straßenfertigers (1, 1'), wenn die gemessene Distanz die vorbestimmte Schwellendistanz (22) unterschreitet,
wobei mindestens eine erste der Bedienfunktionen aktiviert wird, wenn eine Aktivierung mindestens einer zweiten Bedienfunktion vorrausgeht, wobei die zweite Bedienfunktion berührungslos aktiviert wird, indem der Bediener in Bezug zu dem Bedienmodul (7, 7') die Schwellendistanz (22) unterschreitet.

10. Verfahren nach Anspruch 9, **dadurch gekennzeichnet, dass** die berührungslos aktivierte zweite Bedienfunktion das Starten eines Dieselmotors (11) des Straßenfertigers (1, 1') ist.

## Claims

1. Road paver (1, 1') with at least one operating module (7, 7') to enter operating commands whereby the operating module (7, 7') has a plurality of buttons (14) that can each be used in a contact-related way to enter the respective operating commands in order to activate relevant operating functions of the road paver (1, 1'), wherein the road paver (1, 1') further comprises a sensor unit (9) that is designed to detect a distance of an operator to the operating module (7, 7'), whereby the distance determines a space from the operating module (7, 7') to any body part of the operator whereby the sensor unit (9) is connected to a control unit (10) of the road paver (7, 7'), **characterized in that** the control unit (10) is configured to already activate at least one of the operating functions of the road paver (1, 1') as soon as the operator undercuts a predetermined threshold distance (22) in relation to the operating module (7, 7'), wherein at least a first one of the operating functions presupposes a temporally preceding activation of at least a second operating function, whereby the activation of the second operating function occurs in a contactless way as the operator undercuts the threshold distance (22) in relation to the operating module (7, 7').

2. Road paver according to claim 1, **characterized in that** the operating module comprises a start/stop button (19) that is designed for starting and/or stopping of a diesel engine (11) of the road paver (1, 1'), whereby the control unit is designed to already generate a start signal to start the diesel engine (11) as soon as the operator undercuts the predetermined threshold distance (22) in relation to the operating module (7, 7').

3. Road paver according to one of the preceding claims, **characterized in that** the sensor unit (9) is installed in the operating module (7, 7') of the road paver (1, 1').

4. Road paver according to one of the preceding claims, **characterized in that** the sensor unit (9) has at least one sensor (15) that is configured to detect the distance of the operator to the operating module (7, 7').

5. Road paver according to claim 4, **characterized in that** the sensor (15) is a first sensor that is arranged, in relation to a first operating function, closer to a first button (14) through which the first operating function can be activated than to a second button (14) through which the second operating function can be activated.

6. Road paver according to claim 5, **characterized in that** the first sensor (15) is integrated in the first button (14).

7. Road paver according to one of the preceding claims 4 to 6, **characterized in that** the sensor (15) is an infrared sensor, an inductive sensor, a capacitive sensor, a radar sensor or an ultrasound sensor.

8. Road paver according to one of the preceding claims, **characterized in that** some of the operating commands presuppose a contact-based, temporally preceding pressing of another button (14) in order to activate a respective operating function.

9. Process to activate at least one operating function of a road paver (1, 1'), comprising the following steps:
• measurement of a distance between an operating module (7, 7') of the road paver (1, 1') and an operator by means of a sensor unit (9) of the road paver (1, 1'), whereby the distance determines a space from the operating module (7, 7') to any body part of the operator,
• evaluation of the measured distance by means of a control unit (10) of the road paver (1, 1') in relation to a predetermined threshold distance (22), and
• automated activation of at least one operating function of the road paver (1, 1') as soon as the measured distance undercuts the predetermined threshold distance (22), wherein at least a first one of the operating functions is activated if preceded by an activation of at least one second operating function, whereby the second operating function is activated in a contactless way as the operator undercuts the threshold distance (22) in relation to the operating module (7, 7').

10. Process according to claim 9, **characterized in that** the second operating function, which is activated in a contactless way, is the starting of a diesel engine (11) of the road paver (1, 1').

## Revendications

1. Finisseur de route (1, 1') comprenant au moins un module de conduite (7, 7') pour la saisie d'ordres de conduite du finisseur, le module de conduite (7, 7') présentant un grand nombre de touches (14), qui peuvent être actionnées respectivement pour la saisie desdits ordres de conduite respectifs, en vue d'appeler des fonctions de conduite correspondantes du finisseur de route (1, 1'), le finisseur de route (1, 1') comprenant, en outre, un dispositif de capteur (9), qui est conçu pour relever une distance d'un conducteur au module de conduite (7, 7'), ladite distance définissant un espacement du module de conduite (7, 7') à une partie du corps quelconque du conducteur, et le dispositif de capteur (9) étant relié à un dispositif de commande (10) du finisseur de route (1, 1'),
**caractérisé en ce que** le dispositif de commande (10) est configuré pour, au moyen d'un signal de sortie, appeler au moins l'une des fonctions de conduite du finisseur de route (1, 1'), déjà lorsque le conducteur passe en-dessous d'une distance de seuil (22) prédéterminée par rapport au module de conduite (7, 7'), au moins une première des fonctions de conduite supposant une activation préalable dans le temps d'au moins une deuxième fonction de conduite, et l'activation de la deuxième fonction de conduite s'effectuant sans contact, grâce au fait que le conducteur passe sous la distance de seuil (22) par rapport au module de conduite (7, 7').

2. Finisseur de route selon la revendication 1, **caractérisé en ce que** le module de conduite comprend une touche marche-arrêt (19), qui est conçue pour démarrer et/ou arrêter un moteur Diesel (11) du finisseur de route (1, 1'), le dispositif de commande étant conçu pour générer un signal de démarrage destiné à démarrer le moteur Diesel (11), dès que le conducteur passe en-dessous de la distance de seuil (22) prédéterminée, par rapport au module de conduite (7, 7').

3. Finisseur de route selon l'une des revendications précédentes, **caractérisé en ce que** le dispositif de capteur (9) est implanté dans le module de conduite (7, 7') du finisseur de route (1, 1').

4. Finisseur de route selon l'une des revendications précédentes, **caractérisé en ce que** le dispositif de capteur (9) comprend au moins un capteur (15), qui est configuré pour relever la distance du conducteur au module de conduite (7, 7').

5. Finisseur de route selon la revendication 4, **caractérisé en ce que** le capteur (15) est un premier capteur, qui, relativement à la première fonction de conduite, est agencé plus près d'une première touche (14) par laquelle peut être activée la première fonction de conduite, que d'une deuxième touche (14) par laquelle peut être activée la deuxième fonction de conduite.

6. Finisseur de route selon la revendication 5, **caractérisé en ce que** le premier capteur (15) est intégré à la première touche (14).

7. Finisseur de route selon l'une des revendications précédentes 4 à 6, **caractérisé en ce que** le capteur (15) est un capteur à infrarouge, un capteur inductif, un capteur capacitif, un capteur radar ou un capteur à ultrasons.

8. Finisseur de route selon l'une des revendications précédentes, **caractérisé en ce que** certains ordres de conduite supposent une pression de touche sur une autre touche (14), préalablement dans le temps, en vue d'appeler une fonction de conduite correspondante.

9. Procédé pour appeler au moins une fonction de conduite d'un finisseur de route (1, 1'), comprenant les étapes suivantes :
• la mesure d'une distance entre un module de conduite (7, 7') du finisseur de route (1, 1') et un conducteur, au moyen d'un dispositif de capteur (9) du finisseur de route (1, 1'), ladite distance définissant un écartement du module de conduite (7, 7') à une partie quelconque du corps du conducteur,
• le traitement et l'exploitation de la distance mesurée, au moyen d'un dispositif de commande (10) du finisseur de route (1, 1'), par rapport à une distance de seuil (22) prédéterminée, et
• l'activation automatique d'au moins une fonction de conduite du finisseur de route (1, 1'), lorsque la distance mesurée passe en-dessous de la distance de seuil (22) prédéterminée,
au moins une première des fonctions de conduite étant activée lorsqu'elle est précédée de l'activation d'au moins une deuxième fonction de conduite, la deuxième fonction de conduite étant activée sans contact, grâce au fait que le conducteur passe sous la distance de seuil (22) par rapport au module de conduite (7, 7').

10. Procédé selon la revendication 9, **caractérisé en ce que** la deuxième fonction de conduite activée sans contact, est le démarrage d'un moteur Diesel (11) du finisseur de route (1, 1').
